# EUROPÄISCHE PATENTSCHRIFT

(11) **EP 0 847 363 B1**
(45) Veröffentlichungstag und Bekanntmachung des Hinweises auf die Patenterteilung: **04.08.1999**
(21) Anmeldenummer: 96921980.7
(22) Anmeldetag: 13.06.1996
(51) Int. Cl.: B64D 33/08

(54) **FLUGGASTURBINEN-TRIEBWERK MIT EINEM FLÜSSIGKEITS-LUFT-WÄRMETAUSCHER**
AIRCRAFT GAS TURBINE ENGINE WITH A LIQUID-AIR HEAT EXCHANGER
GROUPE PROPULSEUR A TURBINE A GAZ D'AERONEFS, POURVU D'UN ECHANGEUR DE CHALEUR LIQUIDE-AIR

(30) Priorität: 07.07.1995 DE 19524733
(43) Veröffentlichungstag der Anmeldung: 17.06.1998
(73) Patentinhaber: BMW ROLLS-ROYCE GmbH, 61402 Oberursel (DE)
(72) Erfinder: NEGULESCU, Dimitrie, D-14163 Berlin (DE)
(74) Vertreter: Schmidt, Günter, Dipl.-Ing.
(86) Internationale Anmeldenummer: EP9602553
(87) Internationale Veröffentlichungsnummer: WO9702984

(56) Entgegenhaltungen:
- FR-A- 899 601
- FR-A- 942 092
- GB-A- 949 585
- US-A- 2 593 541

## Beschreibung

Die Erfindung betrifft ein Fluggasturbinen-Triebwerk, insbesondere Turboprop-Triebwerk, mit einem in der Triebwerks-Gondel angeordneten Flüssigkeits-Luft-Wärmetauscher, insbesondere Ölkühler, der von einem zwangsgeförderten, über eine Öffnung in der Triebwerks-Gondel zugeführten Kühlluftstrom beaufschlagbar ist. Zum bekannten Stand der Technik wird beispielshalber auf die EP 0 514 119 A1 verwiesen.

An Fluggasturbinen-Triebwerken kann es erforderlich sein, luftgekühlte Flüssigkeits-Wärmetauscher und insbesondere Ölkühler so anzuordnen, daß diese Wärmetauscher sowohl bei Flugbetrieb sowie beim Vorwärts-Dahinrollen des Flugzeuges, als auch dann, wenn das Flugzeug am Boden rückwärts dahinrollt, optimal mit Kühlluft angeströmt werden. Von besonderer Bedeutung ist diese Anforderung bei Turboprop-Triebwerken, da über die Ölkühler dieser Triebwerke relativ große Wärmemengen abgeführt werden müssen.

Ein Problem insbesondere beim Rückwärts-Dahinrollen des Flugzeuges ist dabei die Förderung des den Wärmetauscher beaufschlagenden Luftstromes. Eine besonders voreilhafte Lösung für dieses Problem aufzuzeigen, ist demzufolge Aufgabe der vorliegenden Erfindung.
Zur Lösung dieser Aufgabe ist vorgesehen, daß der Wärmetauscher in einem Strömungskanal angeordnet ist, der rückseitig in der Umgebung mündet und der vorderseitig wahlweise mit einer Lufteintrittsöffnung oder mit dem Zuströmkanal des Verdichters der Fluggasturbine verbindbar ist. Vorteilhafte Aus- und Weiterbildungen sind Inhalt der Unteransprüche.

Näher erläutert wird die Erfindung anhand der Prinzipskizze eines bevorzugten Ausführungsbeispieles. Dabei ist mit der Bezugsziffer 1 die Triebwerks-Gondel eines nur teilweise dargestellten Turboprop-Triebwerks bezeichnet. In dieser in einem Teilschnitt dargestellten Triebwerks-Gondel ist eine Fluggasturbine angeordnet, von der im wesentlichen nur der Verdichter 2 dargestellt ist. Unter Zwischenschaltung eines Getriebes 3 treibt die Fluggasturbine einen Propeller 4 an. Aufgrund der hohen zu übertragenden Leistung wird das Schmieröl des Getriebes 3 so stark erwärmt, daß stets eine wirkungsvolle Ölkühlung erfolgen muß; hierzu ist im wesentlichen innerhalb der Triebwerks-Gondel 1 ein Flüssigkeits-Luft-Wärmetauscher 5, der im folgenden auch als Ölkühler 5 bezeichnet wird, angeordnet.

Es gilt, diesen Ölkühler 5 stets mit einem Kühlluftstrom zu beaufschlagen. Hierzu ist der Ölkühler/Wärmetauscher 5 in einem Strömungskanal 6, der in die Triebwerks-Gondel 1 eingearbeitet ist, angeordnet. An der Vorderseite der Triebwerks-Gondel 1 ist eine Lufteintrittsöffnung 7 vorgesehen, die mit dem Strömungskanal 6 verbunden werden kann. In diesem Falle befindet sich eine mit 10 bezeichnete Strömungs-Leitklappe in der gestrichelt dargestellten Position. Der Strömungskanal 6 mündet auf der anderen Seite des Ölkühlers 5 entweder über eine übliche Düse gemäß Pfeil 16 in der Umgebung, durch Verschiebung einer beweglichen Klappe 15 kann der Strömungskanal 6 jedoch auch über eine Übertrittsöffnung 8 in der Triebwerks-Gondel 1 mit der Umgebung verbunden sein.

Nahe der Lufteintrittsöffnung 7 zweigt vom Strömungskanal 6 ein sog. Verbindungskanal 9 ab, wobei im Bereich der Abzweigung eine verstellbare Strömungs-Leitklappe 10 vorgesehen ist. Mittels eines Verstellhebels 12 ist die Strömungsleitklappe 10 um einen Drehpunkt 13 verschwenkbar. Dargestellt ist diese Strömungs-Leitklappe 10 in ihren beiden unterschiedlichen Endpositionen. Befindet sich die Strömungs-Leitklappe 10 in der gestrichelt dargestellten Lage, so ist eine mögliche Verbindung vom Strömungskanal 6 zum Verbindungskanal 9 unterbrochen, d. h. es ist kein Luftübertritt vom Strömungskanal 6 in den Verbindungskanal 9 möglich. Über die Lufteintrittsöffnung 7 kann dann der Kühlluftstrom zur Beaufschlagung des Ölkühlers 5 direkt in den Strömungskanal 6 eintreten und stromab des Ölkühlers 5 als Kühler-Abluftstrom gemäß Pfeil 16 über die Düse wieder in die Umgebung austreten; die dargestellte Pfeilrichtung 14 ist in diesem Falle ohne Bedeutung.

Der Verbindungskanal 9 kann eine Verbindung herstellen zwischen dem Strömungskanal 6 sowie dem Zuströmkanal 11 des Verdichters 2, über welchen dem Verdichter 2 die Gasturbinen-Betriebsluft zugeführt wird. Wie ersichtlich liegt im vorderen Bereich der Triebwerks-Gondel 1 der Strömungskanal 6 im wesentlichen neben dem Zuströmkanal 11. Wird nun die Strömungs-Leitklappe 10 aus der gestrichelt dargestellten Position in die mit durchgezogener Linie dargestellte Position gebracht, so wird über den nunmehr geöffneten Verbindungskanal 9 der Strömungskanal 6 mit dem Zuströmkanal 11 verbunden, während die Lufteintrittsöffnung 7 geschlossen wird. Gleichzeitig wird die Klappe 15 derart verschoben, daß die Düse geschlossen und die Übertrittsöffnung 8 geöffnet wird. Dies hat zur Folge, daß bei Betrieb der Gasturbine bzw. des Verdichters 2 Luft aus dem Strömungskanal 6 in den Zuströmkanal 11 abgesaugt wird. Als Folge hiervon gelangt ein Luftstrom gemäß Pfeilrichtung 14 über die Übertrittsöffnung 8 in den Strömungskanal 6, durchdringt den Ölkühler 5 und wird schließlich vom Verdichter 2 abgesaugt. Diese Betriebsweise bzw. diese Stellung der Strömungs-Leitklappe 10 sowie der verschiebbaren Klappe 15 wird somit dann gewählt, wenn zu Kühlungszwecken durch den Ölkühler 5 ein Luftstrom geschickt werden soll, wenn jedoch - beispielsweise wegen einer Rückwärtsfahrt des Flugzeuges - über die Lufteintrittsöffnung 7 praktisch kein Luftstrom zum Ölkühler 5 gelangen kann. Im Sinne einer vorteilhaften Funktionsvereinigung fungiert der Verdichter 2 dann gleichzeitig als Fördervorrichtung für einen den Flüssigkeits-Luft-Wärmetauscher 5 beaufschlagenden Kühlluftstrom.

Da dem Verdichter 2 beim Fördern des den Ölkühler 5 beaufschlagenden Kühlluftstromes die teilweise relativ heiße Kühler-Abluft zugeführt wird, sollte diese Beaufschlagung des Verdichters 2 mit heißer Luft so gut als möglich über den Umfang des Verdichters gleichmäßig verteilt erfolgt. Da der Zuströmkanal 11 des Verdichters 2 wie üblich ringförmig ausgebildet ist, ist ebenfalls der Verbindungskanal 9 der im wesentlichen ringförmigen Triebwerks-Gondel 1 angepaßt ebenfalls ringförmig ausgebildet. Mit Übertritt der Kühler-Abluft über die geöffnete Strömungs-Leitklappe 10 in den Verbindungskanal 9 wird sich diese heiße Kühlerabluft zumindest im wesentlichen gleichmäßig über diesen ringförmigen Verbindungskanal 9 verteilen und somit im wesentlichen gleichmäßig verteilt in den Verdichter-Zuströmkanal 11 gelangen. Wird zum einen späteren Zeitpunkt das beschriebene Fluggasturbinen-Triebwerk wieder von vorne angeströmt, so daß ein ausreichend hoher, die Lufteintrittsöffnung 7 beaufschlagender Kühlluftstrom zur Verfügung steht, so wird die Strömungs-Leitklappe 10 wieder in die in gestrichelter Linie dargestellte Position gebracht, so daß der Ölkühler 5 wieder wie üblich bezüglich des Triebwerkes von vorne nach hinten mit Kühlluft durchströmt wird. Mit der beschriebenen Anordnung ist es somit möglich, unter sämtlichen Betriebszuständen auf einfache Weise einen ausreichend großen Kühlluftstrom für die Beaufschlagung des Flüssigkeits-Luft-Wärmetauschers bzw. Ölkühlers 5 bereitzustellen. Dabei können selbstverständlich eine Vielzahl von Details insbesondere konstruktiver Art durchaus abweichend vom gezeigten Ausführungsbeispiel gestaltet sein, ohne den Inhalt der Patentansprüche zu verlassen.

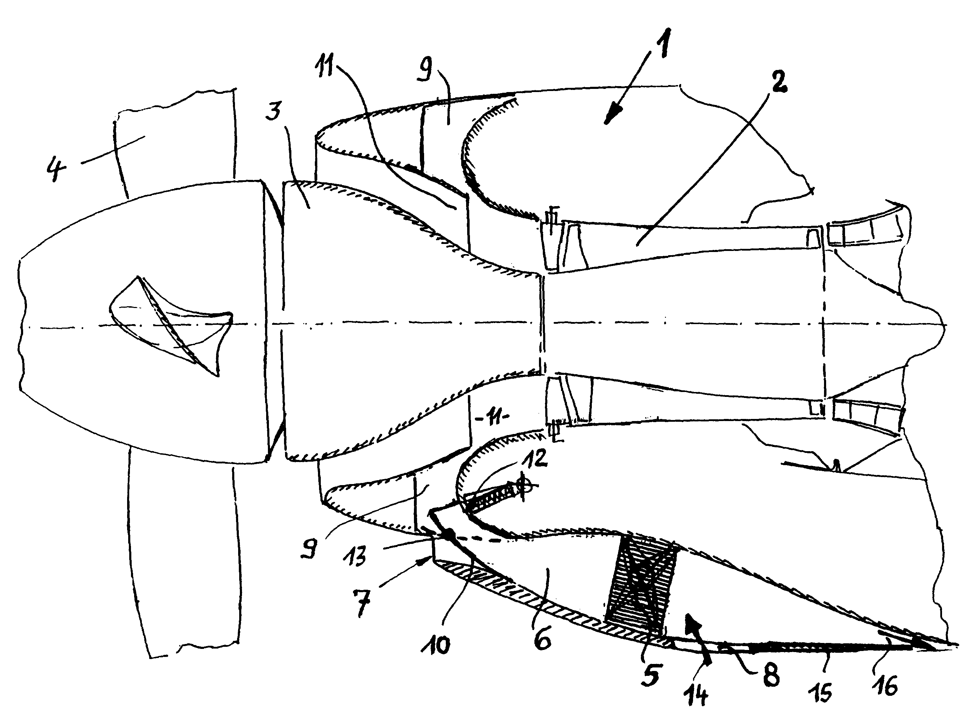

## Patentansprüche

1. Fluggasturbinen-Triebwerk, insbesondere Turboprop-Triebwerk, mit einem in der Triebwerks-Gondel (1) angeordneten Flüssigkeits-Luft-Wärmetauscher (5), der von einem zwangsgeförderten, über eine Öffnung in der Triebwerks-Gondel zugeführten Kühlluftstrom beaufschlagbar ist,
dadurch gekennzeichnet, daß der Wärmetauscher (5) in einem Strömungskanal (6) angeordnet ist, der rückseitig in der Umgebung mündet und der vorderseitig wahlweise mit einer Lufteintrittsöffnung (7) oder mit dem Zuströmkanal (11) des Verdichters (2) der Fluggasturbine verbindbar ist.

2. Fluggasturbinen-Triebwerk nach Anspruch 1,
dadurch gekennzeichnet, daß im vorderseitigen Bereich der Triebwerks-Gondel (1) ein eine verstellbare Strömungs-Leitklappe (10) aufweisender Verbindungskanal (9) zwischen dem Verdichter-Zuströmkanal (11) sowie dem danebenliegenden Wärmetauscher-Strömungskanal (6) vorgesehen ist.

3. Fluggasturbinen-Triebwerk nach Anspruch 1 oder 2,
dadurch gekennzeichnet, daß der Verbindungskanal (9) der im wesentlichen ringförmigen Triebwerks-Gondel (1) angepaßt ringförmig ausgebildet ist.

4. Fluggasturbinen-Triebwerk nach einem der vorangegangenen Ansprüche,
dadurch gekennzeichnet, daß der Wärmetauscher-Strömungskanal (6) rückseitig durch Verschieben einer Klappe (15) wahlweise über eine Düse (Pfeil 16) oder über eine Übertrittsöffnung (8) in der Umgebung mündet.

## Claims

1. An aircraft gas turbine engine, especially a turbo-prop engine, with a fluid-air heat exchanger (5) arranged in the engine nacelle (1), which can be subjected to a forced air stream, taken via an opening in the engine nacelle (1),
characterised in that the heat exchanger (5) is arranged in an air stream duct (6), which opens into the environment at the rear and which can be connected optionally at the front end with an air entry opening (7), or with the infeed duct (11) of the compressor (2) of the aircraft gas turbine.

2. An aircraft gas turbine engine according to Claim 1,
characterised in that in the front end region of the engine nacelle (1) a connecting duct (9) having an adjustable air flow guide flap (10) is provided between the compressor infeed duct (11) and the adjacent heat exchanger air stream duct (6).

3. An aircraft gas turbine engine according to Claim 1 or Claim 2,
characterised in that the connecting duct (9) of the essentially annular engine nacelle (1) is formed in a matching ring shape.

4. An aircraft gas turbine engine according to one of the preceding Claims,
characterised in that the heat exchanger air stream duct (6) opens optionally via a nozzle (arrow 16) or via an overflow opening (8) into the environment.

## Revendications

1. Groupe propulseur à turbine à gaz d'aéronefs, notamment groupe turbopropulseur comportant un échangeur de chaleur liquide-air (5) placé dans la nacelle (1) du groupe propulseur, cet échangeur étant alimenté par un courant d'air de refroidissement, forcé, par une ouverture dans la nacelle,
caractérisé en ce que
l'échangeur de chaleur (5) est placé dans un canal d'écoulement (6) relié à l'environnement par son côté arrière et dont le côté avant peut être relié au choix soit à un orifice d'entrée d'air (7), soit au canal d'alimentation (13) du compresseur (2) de la turbine à gaz.

2. Groupe propulseur à turbine à gaz d'aéronefs selon la revendication 1,
caractérisé en ce que
dans la zone du côté avant de la nacelle (1), il est prévu un canal de liaison (9) avec un volet de guidage d'écoulement réglable (10), dans le canal de liaison (9), entre le canal d'alimentation de compresseur (11) et le canal d'écoulement d'échangeur de chaleur situé à côté (6).

3. Groupe propulseur à turbine à gaz d'aéronefs selon l'une des revendications 1 ou 2
caractérisé en ce que
le canal de liaison (9) est de forme annulaire adaptée pour l'essentiel à la nacelle en forme d'anneau du groupe propulseur (1).

4. Groupe propulseur à turbine à gaz d'aéronefs selon l'une quelconque des revendications précédentes,
caractérisé en ce que
le canal d'écoulement de l'échangeur de chaleur (6) est relié par son côté arrière par déplacement d'un volet (15) soit par une tuyère (flèche 16) soit par un orifice de passage (8) pour déboucher à l'environnement.
